# FASCICULE DE BREVET EUROPEEN

(11) **EP 3 359 507 B1**
(45) Date de publication et mention de la délivrance du brevet: **30.09.2020**
(21) Numéro de dépôt: 16790662.7
(22) Date de dépôt: 05.10.2016
(51) Int. Cl.: C04B 35/622, C04B 35/80, C04B 35/111, B32B 18/00, B28B 1/20, B28B 1/30, B22F 7/04, B28B 23/00, C22C 47/06, C22C 47/14, C22C 49/14, C22C 49/11, C22C 49/06

(54) **PROCÉDÉ DE FABRICATION D'UN ASSEMBLAGE FIBREUX IMPRÉGNÉ**
VERFAHREN ZUR HERSTELLUNG EINER ANORDNUNG AUS IMPRÄGNIERTEN FASERN
PROCESS FOR MANUFACTURING AN IMPREGNATED FIBROUS ASSEMBLY

(30) Priorité: 08.10.2015 FR 1559566
(43) Date de publication de la demande: 15.08.2018
(73) Titulaire: Safran Aircraft Engines, 75015 Paris (FR); SAFRAN, 75015 Paris (FR)
(72) Inventeur: GODON, Thierry, Claude, Henri, 77550 Moissy-Cramayel Cedex (FR); PODGORSKI, Michael, 77550 Moissy-Cramayel (FR)
(74) Mandataire: Cabinet Beau de Loménie
(86) Numéro de dépôt international: PCT/FR2016/052550
(87) Numéro de publication internationale: WO 2017/060615

(56) Documents cités:
- EP-A1- 2 181 974
- EP-A1- 3 302 943
- DE-A1- 4 238 878
- DE-A1-102009 011 585
- US-B1- 6 497 776

## Description

### Arrière-plan de l'invention

L'invention concerne un procédé de fabrication d'un assemblage fibreux imprégné.

Les matériaux composites et en particulier les composites Oxyde/Oxyde peuvent être élaborés de manière connue par empilement de plis pré-imprégnés obtenus par tissage bidimensionnel. Ce type de méthode peut toutefois conduire à l'obtention de matériaux composites stratifiés sensibles au phénomène de délaminage lorsque soumis à une contrainte mécanique.

Afin d'améliorer la résistance au délaminage des matériaux composites, il a été recherché d'éviter l'obtention d'interfaces entre les plis bidimensionnels, et éventuellement de mettre en œuvre un ou plusieurs tissus tridimensionnels à la place des tissus bidimensionnels afin de constituer le renfort fibreux de la pièce à obtenir. Il a alors été envisagé de former la matrice par introduction de particules solides dans le renfort fibreux suivie d'un frittage de ces particules. Afin de réaliser l'introduction des particules dans le renfort fibreux, divers procédés connus ont été mis en œuvre comme l'aspiration de poudres submicroniques (« APS »). Dans ces procédés, le renfort fibreux est imprégné par une barbotine comprenant notamment la poudre de particules en suspension dans un milieu liquide, cette barbotine pouvant en outre éventuellement comporter un liant organique ainsi qu'un agent dispersant.

Cependant, il a été constaté que ces procédés peuvent ne pas fournir des résultats entièrement satisfaisants lorsque le renfort fibreux présente une forme complexe, en particulier une forme creuse avec éventuellement une épaisseur relativement élevée ou des zones de surépaisseurs. Ces procédés peuvent, en effet, dans ce cas être relativement longs et délicats à mettre en œuvre afin d'obtenir la répartition souhaitée des particules à l'intérieur du renfort fibreux. En particulier, dans le cas d'une pièce conique de forme creuse, il peut être nécessaire afin d'éviter des plis du ou des tissus de mettre en œuvre un outillage relativement complexe en plusieurs parties, ainsi que des séquences complexes de préparation au moulage et de démoulage. Le document DE4238878 A1 décrit un procédé de fabrication de produits céramiques utilisant un moulage par centrifugation.

Il existe donc un besoin pour disposer d'un procédé permettant d'obtenir de manière simple une répartition contrôlée des particules solides à l'intérieur d'un renfort fibreux de forme creuse présentant une épaisseur relativement élevée et éventuellement des zones de surépaisseurs.

Il existe en particulier un besoin pour disposer d'un procédé permettant d'obtenir de manière simple une répartition homogène des particules solides à l'intérieur d'un tel renfort.

### Objet et résumé de l'invention

Selon un premier mode de réalisation, l'invention propose un procédé de fabrication d'un assemblage fibreux imprégné, le procédé comprenant au moins les étapes suivantes :
- introduire une première suspension comprenant une première poudre de particules solides en matériau céramique, en matériau métallique ou en carbone dans un volume intérieur délimité par une face interne d'une première texture fibreuse de forme creuse placée dans un moule, une face externe de la première texture fibreuse étant présente en regard d'une paroi du moule,
- imprégner par action de la force centrifuge la première texture fibreuse par la première suspension par mise en rotation du moule sur lui-même,
- positionner, après imprégnation de la première texture par la première suspension, une deuxième texture fibreuse sur la face interne de la première texture fibreuse afin d'obtenir un assemblage fibreux,
- introduire une deuxième suspension comprenant une deuxième poudre de particules solides en matériau céramique, en matériau métallique ou en carbone dans le volume intérieur après positionnement de la deuxième texture fibreuse, et
- imprégner par action de la force centrifuge la deuxième texture fibreuse par la deuxième suspension par mise en rotation du moule sur lui-même afin d'obtenir l'assemblage fibreux imprégné.

Selon un deuxième mode de réalisation, l'invention propose un procédé de fabrication d'un assemblage fibreux imprégné, le procédé comprenant au moins les étapes suivantes :
- introduire une première suspension comprenant une première poudre de particules solides en matériau céramique, en matériau métallique ou en carbone dans un volume intérieur délimité par une face interne d'une première texture fibreuse de forme creuse placée dans un moule, une face externe de la première texture fibreuse étant présente en regard d'une paroi du moule,
- imprégner par action de la force centrifuge la première texture fibreuse par la première suspension par mise en rotation du moule sur lui-même afin de remplir partiellement la porosité de la première texture fibreuse par la première poudre,
- retirer, après imprégnation de la première texture par la première suspension, une première portion du moule située dans une première région en regard de la face externe de la première texture fibreuse,
- positionner une deuxième texture fibreuse sur la face externe de la première texture fibreuse au niveau de la première région afin d'obtenir un assemblage fibreux,
- positionner une deuxième portion de moule au niveau de la première région, la deuxième portion de moule étant une fois positionnée située en regard d'une face externe de la deuxième texture fibreuse,
- introduire une deuxième suspension comprenant une deuxième poudre de particules solides en matériau céramique, en matériau métallique ou en carbone dans le volume intérieur, par exemple après positionnement de la deuxième texture fibreuse et de la deuxième portion de moule, et
- imprégner par action de la force centrifuge les première et deuxième textures fibreuses par la deuxième suspension par mise en rotation du moule muni de la deuxième portion de moule sur lui-même afin d'obtenir l'assemblage fibreux imprégné, la deuxième suspension traversant la première texture afin d'atteindre la deuxième texture lors de cette étape d'imprégnation.

L'assemblage fibreux est destiné à constituer le renfort fibreux d'une pièce en matériau composite.

La deuxième poudre peut être différente de la première poudre. Ainsi, le matériau constituant les particules de la deuxième poudre peut, dans un exemple de réalisation, être différent du matériau constituant les particules de la première poudre. En variante, la taille moyenne des particules de la première poudre peut être différente de la taille moyenne des particules de la deuxième poudre. Sauf mention contraire, on entend par « taille moyenne », la taille donnée par la distribution granulométrique statistique à la moitié de la population, dite D50. Il est encore possible que les première et deuxième poudres diffèrent en termes de distribution de la taille des particules. En variante encore, les particules de la première poudre peuvent avoir une forme différente des particules de la deuxième poudre. En variante ou en combinaison, la concentration en particules solides de la première poudre dans la première suspension peut être différente de la concentration en particules solides de la deuxième poudre dans la deuxième suspension.

En variante, la première poudre est identique à la deuxième poudre.

Dans le premier mode de réalisation, tout ou partie de la porosité de la première texture fibreuse peut être remplie par la première poudre suite à l'imprégnation par la première suspension. Par ailleurs, il est possible que la deuxième suspension imprègne à la fois les première et deuxième textures fibreuses dans l'assemblage fibreux imprégné obtenu dans le cas du premier mode de réalisation.

Dans le deuxième mode de réalisation, seule une partie de la porosité de la première texture a été remplie par les particules de la première poudre suite à l'imprégnation par la première suspension. Ce remplissage partiel permet à la deuxième suspension de traverser la première texture afin de réaliser l'imprégnation de la deuxième texture. Afin de ne remplir que partiellement la porosité de la première texture, la première suspension peut avantageusement présenter une teneur relativement faible en particules de la première poudre, par exemple inférieure ou égale à 20% (teneur volumique), et/ou la durée d'imprégnation par la première suspension peut être relativement limitée. La teneur volumique en particules de la première poudre dans la première suspension peut par exemple être égale à 20%. On peut encore choisir de réaliser une imprégnation locale de la première texture par la première suspension de manière à laisser une ou plusieurs zones de la première texture non imprégnées ou peu imprégnées, ces zones permettant à la deuxième suspension de traverser la première texture pour atteindre la deuxième texture.

L'épaisseur de la première texture peut être supérieure ou égale à 0,5 mm, par exemple être comprise entre 0,5 mm et 10 mm. L'épaisseur de la deuxième texture peut être supérieure ou égale à 0,5 mm, par exemple être comprise entre 0,5 mm et 10 mm. Ainsi, l'épaisseur de l'assemblage fibreux peut être supérieure ou égale à 1 mm, par exemple comprise entre 1 mm et 20 mm. L'épaisseur d'une texture fibreuse ou d'un assemblage fibreux correspond à sa plus petite dimension transversale.

Dans les premier et deuxième modes de réalisation décrits ci-dessus, la rotation du moule sur lui-même génère l'application d'une force centrifuge sur la première suspension afin d'imprégner la première texture fibreuse. Une fois la première texture fibreuse imprégnée, le milieu liquide de la première suspension peut ou non être éliminé. Après imprégnation de la première texture fibreuse et éventuellement après élimination du milieu liquide de la première suspension, le moule est à nouveau mis en rotation afin d'appliquer une force centrifuge sur la deuxième suspension et ainsi imprégner au moins la deuxième texture fibreuse par la deuxième suspension.

Les deux modes de réalisation de l'invention permettent chacun d'obtenir, sous l'action de la force centrifuge générée par la rotation du moule, un assemblage fibreux comprenant les première et deuxième textures fibreuses dans lesquelles sont présentes des particules solides. L'introduction des particules est réalisée « par parties » en introduisant tout d'abord ces particules dans une première partie de l'assemblage constituée par la première texture fibreuse puis dans une deuxième partie de l'assemblage constituée par la deuxième texture fibreuse.

L'invention propose ainsi un procédé relativement simple permettant d'obtenir de manière contrôlée des assemblages fibreux imprégnés, ces assemblages ayant une forme relativement complexe, une épaisseur significative et présentant éventuellement des zones de surépaisseurs.

Dans les deux modes de réalisation décrits ci-dessus, le fait de réaliser une imprégnation « par parties » permet de contrôler de manière satisfaisante la répartition des particules dans un assemblage fibreux de forme complexe présentant une épaisseur relativement élevée, et en particulier d'obtenir une répartition homogène des particules si cela est souhaité. A la différence du cas où un renfort fibreux d'épaisseur relativement élevée est imprégné par centrifugation par une phase continue comme une résine, le fait d'introduire dans un tel renfort fibreux des particules solides présente une difficulté supplémentaire liée au fait de réussir à transporter ces particules au travers du réseau de porosité. Bien qu'il soit possible d'obtenir un résultat satisfaisant lorsque l'on imprègne un renfort fibreux relativement épais par une résine par action de la force centrifuge, des résultats d'une telle qualité ne sont pas toujours obtenus lorsque la résine est remplacée par une suspension de particules.

L'invention propose donc une solution pour résoudre le problème spécifique de l'introduction de particules solides dans la porosité d'un renfort fibreux relativement épais, cette solution résidant dans le fait de réaliser une imprégnation « par parties » du renfort fibreux sous l'action de la force centrifuge.

L'imprégnation par la première suspension et l'imprégnation par la deuxième suspension sont effectuées à des vitesses de rotation du moule différentes.

Dans un exemple de réalisation, l'imprégnation par la première suspension peut être réalisée en imposant une première vitesse de rotation non nulle constante au moule puis l'imprégnation par la deuxième suspension peut être réalisée en imposant une deuxième vitesse de rotation non nulle constante au moule, la deuxième vitesse de rotation étant différente de la première vitesse de rotation.

Dans un exemple de réalisation, dans le cas du premier mode de réalisation notamment, la première vitesse de rotation peut être supérieure à la deuxième vitesse de rotation.

En variante, dans le cas du deuxième mode de réalisation notamment, la première vitesse de rotation peut être inférieure à la deuxième vitesse de rotation.

Dans un exemple de réalisation, le sens de rotation du moule peut être inversé une ou plusieurs fois durant l'imprégnation par la première suspension et/ou durant l'imprégnation par la deuxième suspension.

Un tel exemple de réalisation est avantageux afin d'homogénéiser, lorsque cela est souhaité, la répartition des particules dans l'assemblage fibreux.

En variante, le sens de rotation du moule peut ne pas être modifié durant toute l'imprégnation par la première suspension et/ou durant toute l'imprégnation par la deuxième suspension.

Dans un exemple de réalisation, la première et/ou la deuxième suspension peut être introduite dans le volume intérieur par pulvérisation par un ou plusieurs dispositifs de pulvérisation, le ou les dispositifs de pulvérisation pouvant être animés d'un mouvement de translation et/ou de rotation durant la pulvérisation.

Dans un exemple de réalisation, la première texture fibreuse peut être axisymétrique. En variante ou en combinaison, la deuxième texture fibreuse peut être axisymétrique.

La première et/ou la deuxième texture fibreuse peut par exemple avoir une forme tronconique. En variante, la première et/ou la deuxième texture fibreuse peut avoir une forme cylindrique.

Dans un exemple de réalisation, la première texture fibreuse peut être obtenue par tissage bidimensionnel ou par tissage tridimensionnel. Dans ce cas, la deuxième texture fibreuse peut elle aussi être obtenue par tissage bidimensionnel ou par tissage tridimensionnel.

Dans un exemple de réalisation, les particules de la première poudre peuvent être en matériau céramique, par exemple de type carbure, borure, oxyde ou nitrure, en carbone, en métal ou en alliage métallique. Indépendamment ou en combinaison, les particules de la deuxième poudre peuvent être en matériau céramique, par exemple de type carbure, borure, oxyde ou nitrure, en carbone, en métal ou en alliage métallique. Les particules des première et deuxième poudres peuvent par exemple être formées d'un matériau métallique choisi parmi : l'aluminium, le silicium, le titane, le zirconium et leurs alliages. Lorsque les particules sont formées d'un matériau métallique, ce matériau peut être apte à s'oxyder lors d'un traitement thermique afin de former des particules d'oxydes métalliques lesquelles peuvent ensuite former la matrice de la pièce par frittage.

Les fils formant la première texture fibreuse peuvent être en un matériau réfractaire. La première texture fibreuse peut comporter des fils en matériau céramique, par exemple de type carbure, borure, oxyde ou nitrure, en carbone ou formés d'un alliage métallique. Dans un exemple de réalisation, la première texture fibreuse peut comporter des fils céramiques d'oxyde réfractaire et les particules de la première poudre peuvent être des particules céramiques d'oxyde réfractaire.

Les fils formant la deuxième texture fibreuse peuvent être en un matériau réfractaire. La deuxième texture fibreuse peut comporter des fils en matériau céramique, par exemple de type carbure, borure, oxyde ou nitrure, en carbone ou formés d'un alliage métallique. En particulier, la deuxième texture fibreuse peut comporter des fils céramiques d'oxyde réfractaire et les particules de la deuxième poudre peuvent éventuellement être des particules céramiques d'oxyde réfractaire.

La présente invention vise également un procédé de fabrication d'une pièce en matériau composite comportant au moins les étapes suivantes :
- fabriquer un assemblage fibreux imprégné par mise en œuvre d'un procédé tel que décrit plus haut, puis
- former une phase de matrice densifiant l'assemblage fibreux à partir des particules des première et deuxième poudres afin d'obtenir la pièce en matériau composite.

La pièce en matériau composite ainsi obtenue peut être un tube, un carter ou un anneau de turbine.

Avant formation de la phase de matrice, il est possible d'éliminer le milieu liquide des première et/ou deuxième suspensions imprégnant l'assemblage fibreux.

Dans un exemple de réalisation, la phase de matrice peut être en tout ou partie formée par frittage des particules des première et deuxième poudres.

Une fois que la pièce est obtenue, elle peut subir de manière connue en soi une étape d'usinage afin de lui conférer les dimensions souhaitées et/ou une étape de revêtement par au moins un revêtement de barrière thermique ou de barrière environnementale, par exemple.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente une première texture fibreuse creuse placée dans un moule destinée à être traitée par un procédé selon l'invention,
- la figure 2 représente une coupe selon II-II de la figure 1,
- la figure 3 représente le moule des figures 1 et 2 muni d'un dispositif de pulvérisation destiné à permettre l'introduction d'une suspension de particules dans le volume intérieur,
- la figure 4 illustre la réalisation d'un exemple d'étape d'imprégnation de la première texture fibreuse mise en œuvre dans le cadre d'un procédé selon l'invention,
- la figure 5 illustre le positionnement d'une deuxième texture fibreuse sur la face interne de la première texture fibreuse,
- la figure 6 représente l'évolution de la vitesse de rotation imposée au moule durant un exemple de procédé selon l'invention,
- les figures 7A à 7C illustrent une variante de l'invention dans laquelle la deuxième texture fibreuse est positionnée sur la surface externe de la première texture fibreuse, et
- les figures 8 et 9 illustrent la réalisation de différentes variantes d'étapes d'imprégnation de la première texture fibreuse selon l'invention.

Sur les figures, les dimensions relatives des différents éléments n'ont pas nécessairement été respectées par souci de lisibilité.

### Description détaillée de modes de réalisation

Des exemples de moyens utilisables pour former les première et deuxième textures fibreuses destinées à être mise en œuvre dans le cadre d'un procédé selon l'invention vont tout d'abord être décrits.

Ces textures peuvent être obtenues par tissage multicouche entre une pluralité de couches de fils de chaîne et une pluralité de couches de fils de trame. Le tissage multicouche réalisé peut être notamment un tissage à armure "interlock", c'est-à-dire une armure de tissage dans laquelle chaque couche de fils de trame lie plusieurs couches de fils de chaîne avec tous les fils d'une même colonne de trame ayant le même mouvement dans le plan de l'armure. D'autres types de tissage multicouche pourront bien entendu être utilisés.

Lorsque les textures fibreuses sont réalisées par tissage, le tissage peut être réalisé avec des fils de chaîne s'étendant dans la direction longitudinale des textures fibreuses, étant noté qu'un tissage avec des fils de trame dans cette direction est également possible.

Dans un exemple de réalisation, les fils utilisés peuvent être des fils céramiques en oxyde réfractaire, des fils en carbure de silicium ou des fils en carbone. Différents modes de tissage multicouche utilisables sont décrits dans le document WO 2006/136755.

Les textures peuvent encore être obtenues par assemblage d'au moins deux structures fibreuses. Dans ce cas, les deux structures fibreuses peuvent être liées entre elles, par exemple par couture ou aiguilletage. Les structures fibreuses peuvent notamment être chacune obtenue à partir d'une couche ou d'un empilement de plusieurs couches de :
- tissu unidimensionnel (UD),
- tissu bidimensionnel (2D),
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

Dans le cas d'un empilement de plusieurs couches, celles-ci peuvent être liées entre elles par exemple par couture, par implantation de fils ou d'éléments rigides ou par aiguilletage.

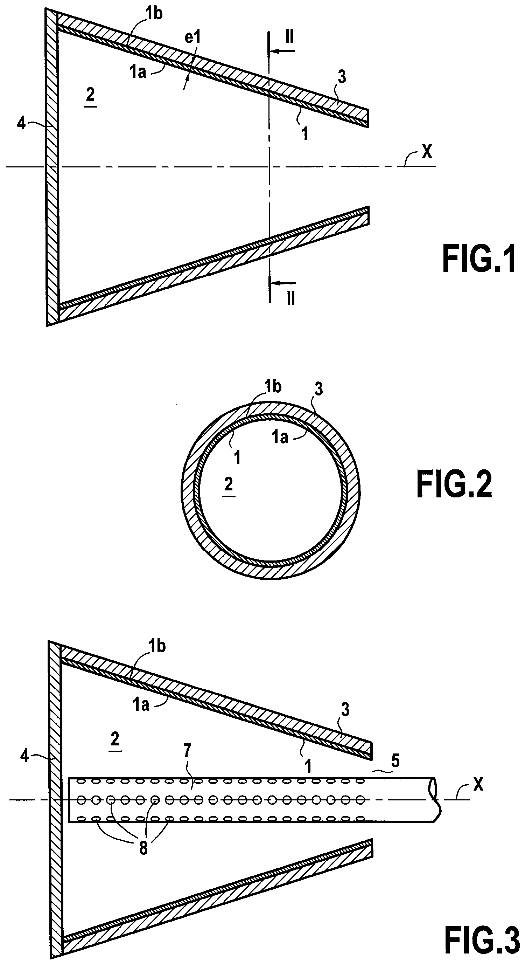

Une fois la première texture creuse 1 fabriquée, celle-ci est ensuite placée dans un moule en positionnant la face externe 1b de la première texture 1 en regard d'une paroi latérale 3 du moule comme illustré aux figures 1 et 2. Comme illustré, la première texture fibreuse 1 est creuse et délimite un volume intérieur 2. Dans l'exemple illustré, le moule ainsi que la première texture 1 sont de forme axisymétrique, ici tronconique. On ne sort pas du cadre de l'invention lorsque le moule et la première texture ont une autre forme comme une forme cylindrique par exemple. La face interne la de la première texture 1 présente dans le moule délimite un volume intérieur 2 dans lequel les première et deuxième suspensions sont destinées à être introduites. La première texture 1 présente dans le moule peut, avant mise en œuvre de l'étape d'imprégnation, être sèche et éventuellement ne pas contenir de particules solides dans sa porosité interne. En variante, la première texture 1 a subi avant son placement dans le moule une étape préalable d'imprégnation ayant conduit à l'introduction de particules solides dans sa porosité interne.

Une fois la première texture 1 introduite dans le moule, ce dernier est refermé à une de ses extrémités par une paroi de fond 4. L'introduction de la première texture 1 dans le moule peut être effectuée manuellement. Une fois introduite dans le moule, la première texture 1 est maintenue en position dans le moule, par exemple par fixation des bords de la première texture 1 au moule, cette fixation pouvant être réalisée par des éléments rapportés comme des vis ou par un ruban adhésif (scotch®). Il est encore possible de maintenir en position la première texture 1 dans le moule grâce à un noyau central creux ajouré, par exemple sous forme de grille, positionné en regard de la face interne la de la première texture 1. Ce noyau central présente une pluralité d'ajours permettant à un milieu liquide de le traverser afin d'imprégner la première texture 1.

L'épaisseur e₁ de la première texture 1 peut être supérieure ou égale à 0,5 mm, par exemple être comprise entre 0,5 mm et 10 mm.

Le moule est relié à un système de mise en rotation (non représenté) permettant de mettre le moule en rotation autour de l'axe de rotation X lequel correspond aussi, dans l'exemple illustré, à l'axe longitudinal de la première texture 1.

Une fois la première texture 1 placée dans le moule, un dispositif de pulvérisation 7 d'une suspension de particules solides est ensuite introduit dans le moule par l'extrémité 5 du moule située du côté opposé à la paroi de fond 4 comme illustré à la figure 3. Le dispositif de pulvérisation 7 présente sur sa surface une pluralité d'orifices 8 au travers desquels une première suspension de particules solides est destinée à être introduite dans le volume intérieur 2.

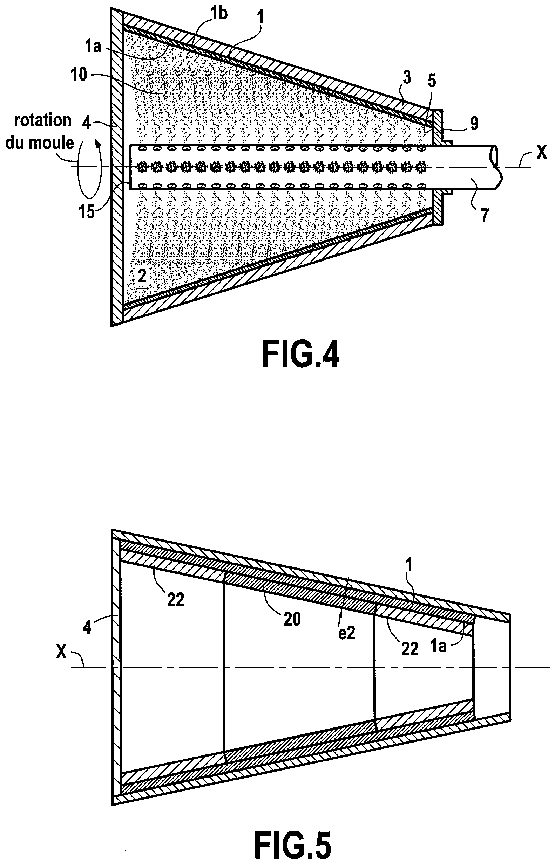

Afin de réaliser l'imprégnation de la première texture 1, on referme le moule au niveau de l'extrémité 5 par le couvercle 9. Ensuite, la première suspension 10 comprenant une première poudre de particules solides en suspension dans un milieu liquide est introduite dans le volume intérieur 2, comme illustré à la figure 4. Les particules de la première poudre peuvent être en matériau céramique, en matériau métallique ou en carbone. La première suspension 10 est, dans l'exemple illustré, introduite dans le volume intérieur 2 par pulvérisation par le dispositif de pulvérisation 7.

Des variantes autres que celle illustrée à la figure 4 sont possibles afin d'introduire une suspension de particules solides dans le volume intérieur 2 comme il sera détaillé plus bas.

Le moule est quant à lui mis en rotation sur lui-même à une vitesse de rotation non nulle autour de l'axe de rotation X afin d'imprégner par action de la force centrifuge la première texture 1 par la première suspension 10. La mise en rotation du moule sur lui-même peut être initiée avant ou pendant l'introduction de la première suspension 10 dans le volume intérieur 2. Le moule peut, dans un exemple de réalisation, être animé d'une vitesse de rotation non nulle constante durant l'imprégnation de la première texture par la première suspension. En variante, on peut faire varier la vitesse de rotation du moule durant l'imprégnation de la première texture par la première suspension.

Il est possible d'imprégner la première texture 1 par la première suspension jusqu'à saturation (i.e. jusqu'à remplissage complet). Dans ce cas, la rotation du moule est stoppée après remplissage complet de la première texture. En variante, il est possible de ne remplir que partiellement la première texture par la première suspension et d'introduire ensuite une troisième suspension différente de la première dans le volume intérieur puis de procéder à l'imprégnation de la première texture par la troisième suspension par mise en rotation du moule sur lui-même. Dans ce dernier cas, l'imprégnation de la première texture par la troisième suspension peut ou non être réalisée jusqu'à remplissage complet. Dans le cas où une troisième suspension est mise en œuvre, le procédé est ensuite poursuivi par positionnement de la deuxième texture et imprégnation par la deuxième suspension.

Après imprégnation de la première texture 1 par la première suspension, une deuxième texture fibreuse 20 peut être fixée sur la face interne la de la première texture fibreuse 1 afin d'obtenir un assemblage fibreux (voir figure 5). La première suspension imprégnant la première texture 1 peut présenter un pouvoir adhésif suffisant permettant de fixer la deuxième texture 20 à la face interne la de la première texture 1. En variante, la fixation de la deuxième texture 20 à la première texture 1 peut être réalisée par un élément adhésif additionnel, par exemple par un ruban adhésif (scotch®), ou par une opération textile telle qu'un aiguilletage.

Le maintien de la deuxième texture 20 en position dans le moule peut être amélioré par fixation des bords de la deuxième texture au moule par un ruban adhésif ou par mise en œuvre d'un noyau central creux ajouré comme mentionné plus haut pour la première texture.

L'assemblage fibreux comporte au moins les première 1 et deuxième 20 textures fibreuses. La deuxième texture 20 peut par exemple être destinée à former une zone de surépaisseur de l'assemblage fibreux comme illustré à la figure 5. La deuxième texture fibreuse 20 peut être fabriquée de la même manière que décrit plus haut relativement à la première texture fibreuse 1. La deuxième texture fibreuse 20 peut avoir une épaisseur e₂ supérieure ou égale à 0,5 mm, par exemple comprise entre 0,5 mm et 10 mm.

Dans l'exemple de la figure 5, une membrane imperméable 22 est en outre positionnée sur la face interne la de la première texture 1 dans une ou plusieurs zones différentes de celle dans laquelle la deuxième texture 20 est présente. Cette membrane 22 permet d'éviter que la deuxième suspension ne pénètre dans la première texture fibreuse 1 lors de la mise en rotation du moule. Bien entendu, on ne sort pas du cadre de l'invention lorsque cette membrane imperméable n'est pas mise en œuvre. Le maintien de la membrane imperméable 22 en position dans le moule peut être effectué de la même manière que pour les première et deuxième textures. Dans l'exemple illustré, la deuxième texture 20 ne s'étend que sur une partie de la face interne la de la première texture 1. Dans une variante non illustrée, la deuxième texture s'étend sur l'intégralité de la face interne de la première texture.

Une fois la deuxième texture 20 positionnée sur la face interne la, on introduit dans le volume intérieur une deuxième suspension comprenant une deuxième poudre de particules solides en suspension dans un milieu liquide. Les particules de la deuxième poudre peuvent être en matériau céramique, en matériau métallique ou en carbone. Le moule est quant à lui mis en rotation sur lui-même à une vitesse de rotation non nulle autour de l'axe de rotation X afin d'imprégner par action de la force centrifuge la deuxième texture 20 par la deuxième suspension. L'imprégnation de la deuxième texture fibreuse par la deuxième suspension peut être effectuée en utilisant le dispositif de pulvérisation 7 comme décrit plus haut.

La première texture peut, après imprégnation par la deuxième suspension, comporter des particules des première et deuxième poudres.

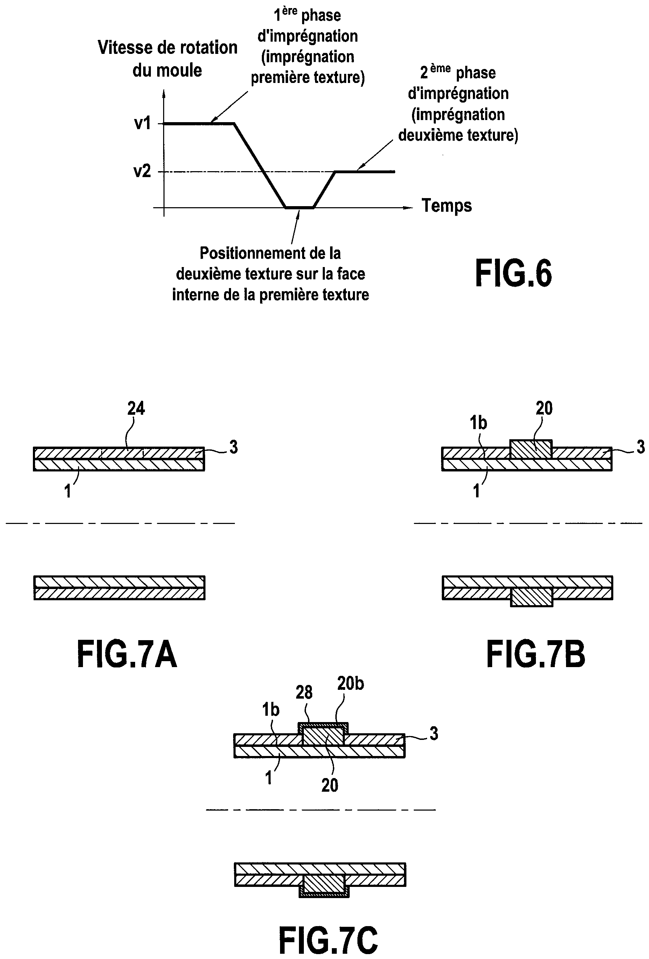

La vitesse de rotation du moule mise en œuvre lors de l'imprégnation de la première texture est différente de celle mise en œuvre lors de l'imprégnation de la deuxième texture. Le graphe de la figure 6 montre une possibilité d'évolution de la vitesse de rotation imposée au moule.

On peut ainsi lors de l'imprégnation de la première texture imposer au moule une première vitesse de rotation constante v₁ puis diminuer continument la vitesse de rotation du moule jusqu'à arrêter la rotation du moule. La deuxième texture 20 peut alors être positionnée sur la face interne la de la première texture 1 comme illustré à la figure 5. La rotation du moule est alors reprise en imposant une deuxième vitesse de rotation constante v₂ afin d'imprégner la deuxième texture 20 par la deuxième suspension. La durée de la première phase d'imprégnation (phase d'imprégnation de la première texture) peut être supérieure, égale ou inférieure à la durée de la deuxième phase d'imprégnation (phase d'imprégnation de la deuxième texture). Le fait de modifier le profil de vitesse de rotation imposé au moule peut permettre d'obtenir, si cela est souhaité, une répartition des particules homogène le long de l'épaisseur de l'assemblage fibreux comprenant les première et deuxième textures.

Le moule peut, dans un exemple de réalisation, être animé d'une vitesse de rotation non nulle constante durant l'imprégnation de la deuxième texture par la deuxième suspension. En variante, on peut faire varier la vitesse de rotation du moule durant l'imprégnation de la deuxième texture par la deuxième suspension. On peut imposer au moule, durant l'imprégnation de la deuxième texture par la deuxième suspension, une vitesse de rotation inférieure ou égale ou supérieure à la vitesse de rotation imposée au moule durant l'imprégnation de la première texture par la première suspension.

A titre d'exemple, la vitesse de rotation imposée au moule durant tout ou partie de l'imprégnation par la première suspension et/ou par la deuxième suspension peut être supérieure ou égale à 1 tour/minute, par exemple comprise entre 1 tour/minute et 5000 tours/minute.

Indépendamment du profil d'évolution de la vitesse de rotation du moule mis en œuvre et du mode de réalisation selon l'invention considéré, le dispositif de pulvérisation 7 peut être animé d'un mouvement de translation le long de l'axe de rotation X lors de l'imprégnation de la première 1 et/ou de la deuxième 20 texture. L'extrémité 15 du dispositif de pulvérisation 7 peut ainsi effectuer une pluralité d'aller-retour entre deux positions distinctes espacées le long de l'axe de rotation X. Indépendamment ou en combinaison avec ce mouvement de translation qui vient d'être décrit, le dispositif de pulvérisation 7 peut être animé d'un mouvement de rotation lors de l'imprégnation de la première 1 et/ou de la deuxième 20 texture. Dans ce cas, le dispositif de pulvérisation 7 peut tourner dans le même sens de rotation que le moule ou en sens inverse, à la même vitesse de rotation que le moule ou à une vitesse de rotation différente. Le fait d'imposer un mouvement de translation et/ou de rotation au dispositif de pulvérisation 7 peut avantageusement permettre d'améliorer encore le caractère homogène de l'imprégnation réalisée. En variante, le dispositif de pulvérisation 7 reste fixe durant l'imprégnation des première et deuxième textures.

On a représenté à la figure 3 un dispositif de pulvérisation 7 présentant une répartition homogène des orifices 8, ces orifices.8 étant tous de la même taille. Bien entendu, on ne sort pas du cadre de l'invention lorsque ce n'est pas le cas. En effet, le dispositif de pulvérisation peut en variante présenter un premier ensemble d'orifices présentant une première taille et un deuxième ensemble d'orifices présentant une deuxième taille différente de la première. Le premier ensemble d'orifices peut être situé dans une première région du dispositif de pulvérisation différente, voire disjointe, d'une deuxième région du dispositif de pulvérisation dans laquelle est situé le deuxième ensemble d'orifices. Les première et deuxième régions peuvent être décalées le long de l'axe de rotation X. Par exemple, la première taille peut être supérieure à la deuxième taille et le premier ensemble d'orifices peut être situé en regard d'une zone de la première texture fibreuse de plus grand diamètre que la zone de la première texture fibreuse située en regard du deuxième ensemble d'orifices. En variante, les orifices du premier ensemble et les orifices du deuxième ensemble peuvent être mélangés sur la surface du dispositif de pulvérisation.

En variante ou en combinaison avec les caractéristiques précitées relativement à la taille des orifices, la densité des orifices peut varier lorsque l'on se déplace sur la surface du dispositif de pulvérisation. Ainsi, le dispositif de pulvérisation peut dans une première région présenter une première densité d'orifices et peut dans une deuxième région différente de la première présenter une deuxième densité d'orifices différente de la première. Les première et deuxième régions peuvent être décalées le long de l'axe de rotation X. Par exemple, la première densité peut être supérieure à la deuxième densité et la première région peut être située en regard d'une zone de la première texture fibreuse de plus grand diamètre que la zone de la première texture fibreuse située en regard de la deuxième région.

En variante ou en combinaison avec les caractéristiques précitées, la répartition géométrique des orifices du dispositif de pulvérisation peut varier lorsque l'on se déplace le long de l'axe de rotation X, les orifices étant par exemple disposés en quinconce.

Dans un exemple de réalisation, une couche d'un matériau poreux (non représentée) peut être présente entre la face externe 1b de la première texture fibreuse 1 et la paroi latérale 3 du moule. Cette couche en matériau poreux permet de drainer le milieu liquide de la suspension introduite dans la première texture fibreuse tout en permettant de retenir dans la première texture fibreuse les particules solides introduites. Du fait de l'utilisation d'une couche en matériau poreux permettant le drainage sélectif du milieu liquide, il est possible d'obtenir une accumulation de particules solides dans la première texture fibreuse et ainsi d'augmenter le taux volumique de matrice obtenu à l'issue du procédé.

Une fois l'imprégnation des première et deuxième textures terminée, le milieu liquide de la première suspension et de la deuxième suspension peut être éliminé. Cette élimination peut être effectuée par chauffage ou par aspiration (mise sous vide). Ainsi, le moule peut être muni d'un organe de chauffage ou être placé dans une enceinte chauffée ou encore être relié à un dispositif de pompage permettant d'évaporer le milieu liquide. En variante, on peut après imprégnation de la première texture fibreuse par la première suspension éliminer le milieu liquide de la première suspension, puis imprégner la deuxième texture fibreuse par la deuxième suspension, puis éliminer le milieu liquide de la deuxième suspension.

La viscosité de la première suspension et/ou de la deuxième suspension peut être d'environ 30 mPa.s lorsque mesurée à l'aide d'un viscosimètre de type Brookfield à la température de 20°C.

De manière connue en soi, la première suspension et/ou la deuxième suspension peut comporter un liant organique.

La teneur volumique en particules solides dans la première suspension et/ou dans la deuxième suspension peut être inférieure ou égale à 40%. La teneur volumique en particules solides dans la première suspension et/ou dans la deuxième suspension peut être supérieure ou égale à 20%, et par exemple être comprise entre 20% et 40%. L'invention peut avantageusement permettre de mettre en œuvre des suspensions relativement chargées en particules solides car même si ces suspensions présentent une viscosité relativement élevée, il est quand même possible de réaliser l'imprégnation avec ce type de suspensions en augmentant la vitesse de rotation du moule.

On peut alors obtenir une pièce en matériau composite dont l'assemblage comprenant les première et deuxième textures constitue le renfort fibreux en formant une phase de matrice de densification par exemple par frittage des particules solides présentes dans l'assemblage fibreux. En variante, si par exemple les particules solides introduites sont des particules de carbone, on peut former une phase de matrice en infiltrant l'assemblage fibreux par une composition fondue à base de silicium afin de former une phase de matrice en carbure de silicium par réaction entre le carbone introduit et le silicium fondu. Cet exemple de réalisation dans lequel une phase de matrice est formée par infiltration d'une composition à l'état fondu peut aussi être mis en œuvre lorsque les particules solides introduites par centrifugation sont des particules céramiques, par exemple d'un carbure et/ou d'un nitrure. La formation de la matrice de densification permet d'améliorer encore la cohésion entre les première et deuxième textures.

On a représenté aux figures 7A à 7C une variante dans laquelle on retire, après imprégnation de la première texture 1 par la première suspension, une première portion du moule 24 située dans une première région en regard de la face externe 1b de la première texture 1. On positionne ensuite une deuxième texture 20 sur la face externe 1b de la première texture 1 au niveau de la première région (voir figure 7B). On fixe alors une deuxième portion de moule 28 au niveau de la première région en regard d'une face externe 20b de la deuxième texture fibreuse 20 (voir figure 7C). La deuxième portion 28 de moule peut, comme illustré, avoir une forme différente de celle de la première portion 24 de moule. On réalise ensuite l'introduction de la deuxième suspension dans le volume intérieur et l'imprégnation de la deuxième texture par la deuxième suspension par mise en rotation du moule muni de la deuxième portion de moule sur lui-même. Dans ce mode de réalisation, seule une partie de la porosité de la première texture a été remplie par les particules de la première poudre suite à l'imprégnation par la première suspension afin de permettre à la deuxième suspension de traverser la première texture pour atteindre la deuxième texture. Ainsi, la forme du moule peut être modifiée lors de la mise en œuvre d'un exemple de procédé selon l'invention.

Les moyens décrits plus haut pour introduire dans le volume intérieur la première suspension peuvent être utilisés afin d'introduire la deuxième suspension dans le volume intérieur. Le moule peut, dans un exemple de réalisation, être animé d'une vitesse de rotation non nulle constante durant l'imprégnation de la deuxième texture par la deuxième suspension. En variante, on peut faire varier la vitesse de rotation du moule durant l'imprégnation de la deuxième texture par la deuxième suspension. On peut imposer au moule, durant l'imprégnation de la deuxième texture par la deuxième suspension, une vitesse de rotation supérieure à la vitesse de rotation imposée au moule durant l'imprégnation de la première texture par la première suspension.

Indépendamment du mode de réalisation mis en œuvre, la deuxième texture fibreuse peut comporter des fils en matériau céramique, par exemple en carbure de silicium ou en oxyde réfractaire, ou en carbone.

On ne sort pas du cadre de l'invention lorsque le sens de rotation du moule et/ou du dispositif de pulvérisation 7 est inversé une ou plusieurs fois durant l'imprégnation par la première suspension et/ou par la deuxième suspension.

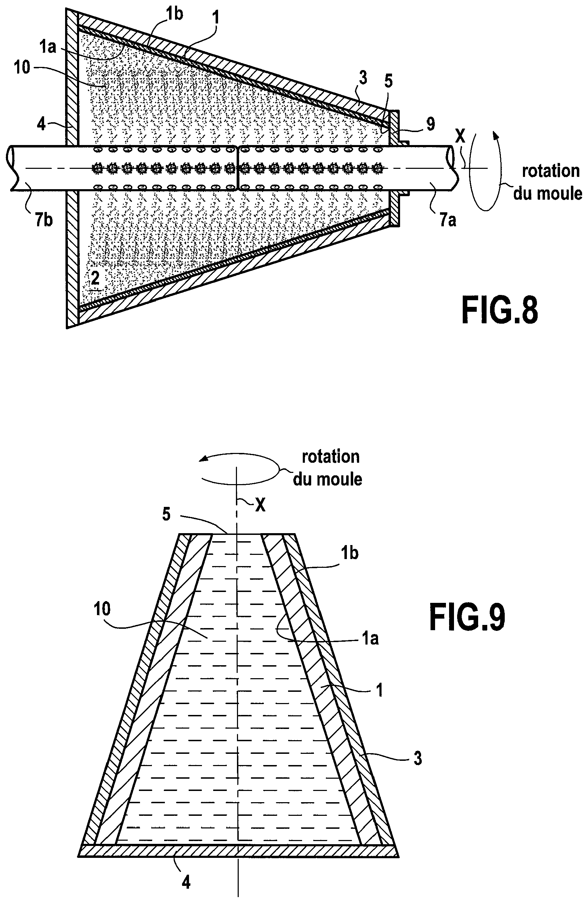

On a représenté à la figure 8 une variante d'étape d'imprégnation de la première texture 1 dans laquelle deux dispositifs 7a et 7b de pulvérisation sont mis en œuvre. Les dispositifs 7a et 7b sont chacun positionnés au niveau d'une extrémité opposée du moule. Une telle configuration peut être utilisée dans le cadre du premier mode de réalisation selon l'invention ou du deuxième mode de réalisation selon l'invention.

De la même manière que décrit plus haut, le dispositif 7a et/ou le dispositif 7b peut être animé d'un mouvement de rotation et/ou de translation lors de l'imprégnation.

On a représenté à la figure 9 une variante de procédé d'imprégnation selon l'invention. Dans l'exemple représenté à la figure 9, la première suspension 10 est introduite par versement dans le volume intérieur. La suspension est introduite au travers de l'extrémité 5 située du côté opposé à la paroi de fond 4 du moule. Le moule est ensuite mis en rotation sur lui-même comme détaillé plus haut afin d'imprégner la première texture 1 par la première suspension 10. On peut, dans le cas de l'exemple illustré à la figure 9, verser dans le volume intérieur une première fraction de la première suspension puis mettre en rotation le moule afin d'imprégner la première texture 1 par ladite première fraction et ensuite verser dans le volume intérieur une deuxième fraction de la première suspension afin d'imprégner la première texture 1 lors de la rotation du moule par ladite deuxième fraction. Comme illustré à la figure 9, la première suspension introduite peut remplir sensiblement l'intégralité du volume intérieur.

Dans une variante non illustrée, on peut imprégner à l'aide du même moule simultanément une pluralité de textures fibreuses creuses par la même ou par des suspensions de particules solides différentes. Dans ce cas, au moins une paroi de séparation est présente dans le volume intérieur du moule, cette paroi de séparation délimitant deux chambres de traitement distinctes, une texture fibreuse étant présente dans chacune des chambres de traitement.

Dans une variante non illustrée, on peut, une fois la deuxième texture fibreuse imprégnée, positionner une troisième texture fibreuse puis procéder à son imprégnation par une suspension de particules par mise en rotation du moule.

### Exemple

Une première texture fibreuse de forme tronconique présentant un petit diamètre de 10 cm et un grand diamètre de 150 cm et formée de fibres d'alumine « Nextel 610 » fournies par la société 3M a été placée dans un moule.

Comme illustré sur la figure 1, la face externe de la première texture a été placée en regard d'une paroi latérale du moule, la face interne de la première texture délimitant un volume intérieur. Une première suspension d'une poudre d'alumine de type SM8 à 20 % volumique a été introduite dans le volume intérieur. Afin de réaliser l'imprégnation de la première texture, la vitesse de rotation du moule a été fixée à 500 tours/minutes pendant 30 minutes.

Une deuxième texture fibreuse de forme tronconique présentant un petit diamètre de 120 cm et un grand diamètre de 130 cm et formée de fibres d'alumine « Nextel 610 » a alors été positionnée sur la face interne de la première texture fibreuse imprégnée afin d'obtenir l'assemblage fibreux. Une membrane imperméable a été appliquée sur les zones de la face interne de la première texture fibreuse non recouvertes par la deuxième texture fibreuse.

Une deuxième suspension d'une poudre d'alumine de type SM8 à 20 % volumique a été introduite dans le volume intérieur. Afin de réaliser l'imprégnation de la deuxième texture, la vitesse de rotation du moule a été fixée à 1000 tours/minutes pendant 15 minutes.

Une fois l'assemblage fibreux imprégné, le milieu liquide des première et deuxième suspensions a été éliminé par évaporation sous vide à une pression inférieure ou égale à 23 mbars. Les particules d'alumine ont ensuite été frittées. Les volumes des première et deuxième suspensions introduits ont été choisis de manière à obtenir, après frittage, un taux volumique de fibres dans la pièce d'environ 50 % et un taux volumique de matrice d'environ 32 %.

L'expression « compris(e) entre ... et ... » ou « allant de ... à ... » doit se comprendre comme incluant les bornes.

## Revendications

1. Procédé de fabrication d'un assemblage fibreux imprégné, le procédé comprenant au moins les étapes suivantes :
- introduire une première suspension (10) comprenant une première poudre de particules solides en matériau céramique, en matériau métallique ou en carbone dans un volume intérieur (2) délimité par une face interne (1a) d'une première texture fibreuse (1) de forme creuse placée dans un moule, une face externe (1b) de la première texture fibreuse (1) étant présente en regard d'une paroi (3) du moule,
- imprégner par action de la force centrifuge la première texture fibreuse (1) par la première suspension (10) par mise en rotation du moule sur lui-même,
- positionner, après imprégnation de la première texture (1) par la première suspension, une deuxième texture fibreuse (20) sur la face interne (1a) de la première texture fibreuse (1) afin d'obtenir un assemblage fibreux,
- introduire une deuxième suspension comprenant une deuxième poudre de particules solides en matériau céramique, en matériau métallique ou en carbone dans le volume intérieur (2) après positionnement de la deuxième texture fibreuse (20), et
- imprégner par action de la force centrifuge la deuxième texture fibreuse (20) par la deuxième suspension par mise en rotation du moule sur lui-même afin d'obtenir l'assemblage fibreux imprégnée, l'imprégnation par la première suspension et l'imprégnation par la deuxième suspension étant effectuées à des vitesses de rotation du moule différentes.

2. Procédé de fabrication d'un assemblage fibreux imprégné, le procédé comprenant au moins les étapes suivantes :
- introduire une première suspension (10) comprenant une première poudre de particules solides en matériau céramique, en matériau métallique ou en carbone dans un volume intérieur (2) délimité par une face interne (la) d'une première texture fibreuse (1) de forme creuse placée dans un moule, une face externe (1b) de la première texture fibreuse (1) étant présente en regard d'une paroi (3) du moule,
- imprégner par action de la force centrifuge la première texture fibreuse (1) par la première suspension (10) par mise en rotation du moule sur lui-même afin de remplir partiellement la porosité de la première texture fibreuse (1) par la première poudre,
- retirer, après imprégnation de la première texture (1) par la première suspension, une première portion (24) du moule située dans une première région en regard de la face externe (1b) de la première texture fibreuse (1),
- positionner une deuxième texture fibreuse (20) sur la face externe (1b) de la première texture fibreuse (1) au niveau de la première région afin d'obtenir un assemblage fibreux,
- positionner une deuxième portion (28) de moule au niveau de la première région, la deuxième portion (28) de moule étant une fois positionnée située en regard d'une face externe (20b) de la deuxième texture fibreuse (20),
- introduire une deuxième suspension comprenant une deuxième poudre de particules solides en matériau céramique, en matériau métallique ou en carbone dans le volume intérieur (2), et
- imprégner par action de la force centrifuge les première et deuxième textures fibreuses (1 ; 20) par la deuxième suspension par mise en rotation du moule muni de la deuxième portion (28) de moule sur lui-même afin d'obtenir l'assemblage fibreux imprégné, la deuxième suspension traversant la première texture afin d'atteindre la deuxième texture lors de cette étape d'imprégnation, l'imprégnation par la première suspension et l'imprégnation par la deuxième suspension étant effectuées à des vitesses de rotation du moule différentes.

3. Procédé selon l'une quelconque des revendications 1 ou 2, dans lequel le sens de rotation du moule est inversé une ou plusieurs fois durant l'imprégnation par la première suspension (10) et/ou durant l'imprégnation par la deuxième suspension.

4. Procédé selon l'une quelconque des revendications 1 à 4, dans lequel la première et/ou la deuxième suspension est introduite dans le volume intérieur par pulvérisation par un ou plusieurs dispositifs de pulvérisation (7 ; 7a ; 7b), le ou les dispositifs de pulvérisation (7 ; 7a ; 7b) étant animés d'un mouvement de translation et/ou de rotation durant la pulvérisation.

5. Procédé selon l'une quelconque des revendications 1 à 5, dans lequel la première texture fibreuse (1) est axisymétrique.

6. Procédé selon l'une quelconque des revendications 1 à 6, dans lequel la première texture fibreuse (1) est obtenue par tissage bidimensionnel ou par tissage tridimensionnel.

7. Procédé selon l'une quelconque des revendications 1 à 6, dans lequel la première texture fibreuse (1) comporte des fils céramiques d'oxyde réfractaire et dans lequel les particules de la première poudre sont des particules céramiques d'oxyde réfractaire.

8. Procédé de fabrication d'une pièce en matériau composite comportant au moins les étapes suivantes :
- fabriquer un assemblage fibreux imprégné par mise en œuvre d'un procédé selon l'une quelconque des revendications 1 à 7, puis
- former une phase de matrice densifiant l'assemblage fibreux à partir des particules des première et deuxième poudres afin d'obtenir la pièce en matériau composite.

9. Procédé selon la revendication 8, dans lequel la phase de matrice est en tout ou partie formée par frittage des particules des première et deuxième poudres.

## Patentansprüche

1. Verfahren zur Herstellung einer imprägnierten Faseranordnung, wobei das Verfahren wenigstens die folgenden Schritte umfasst:
- Einbringen einer ersten Suspension (10), umfassend ein erstes Pulver aus festen Partikeln aus Keramikmaterial, aus metallischem Material oder aus Kohlenstoff, in ein Innenvolumen (2), das durch eine Innenseite (1a) einer in einer Form angeordneten ersten Faserstruktur (1) mit hohler Form begrenzt ist, wobei eine Außenseite (1b) der ersten Faserstruktur (1) gegenüber einer Wand (3) der Form vorhanden ist,
- Imprägnieren der ersten Faserstruktur (1) mit der ersten Suspension (10) durch Wirken der Fliehkraft, indem die Form um sich selbst in Rotation versetzt wird,
- Positionieren einer zweiten Faserstruktur (20) auf der Innenseite (1a) der ersten Faserstruktur (1) nach dem Imprägnieren der ersten Struktur (1) mit der ersten Suspension, um eine Faseranordnung zu erhalten,
- Einbringen einer zweiten Suspension, umfassend ein zweites Pulver aus festen Partikeln aus Keramikmaterial, aus metallischem Material oder aus Kohlenstoff, in das Innenvolumen (2) nach Positionieren der zweiten Faserstruktur (20), und
- Imprägnieren der zweiten Faserstruktur (20) mit der zweiten Suspension (20) durch Wirken der Fliehkraft, indem die Form um sich selbst in Rotation versetzt wird, um die imprägnierte Faseranordnung zu erhalten, wobei das Imprägnieren mit der ersten Suspension und das Imprägnieren mit der zweiten Suspension bei unterschiedlichen Drehzahlen der Form durchgeführt werden.

2. Verfahren zur Herstellung einer imprägnierten Faseranordnung, wobei das Verfahren wenigstens die folgenden Schritte umfasst:
- Einbringen einer ersten Suspension (10), umfassend ein erstes Pulver aus festen Partikeln aus Keramikmaterial, aus metallischem Material oder aus Kohlenstoff, in ein Innenvolumen (2), das durch eine Innenseite (1a) einer in einer Form angeordneten ersten Faserstruktur (1) mit hohler Form begrenzt ist, wobei eine Außenseite (1b) der ersten Faserstruktur (1) gegenüber einer Wand (3) der Form vorhanden ist,
- Imprägnieren der ersten Faserstruktur (1) mit der ersten Suspension (10) durch Wirken der Fliehkraft, indem die Form um sich selbst in Rotation versetzt wird, um die Porosität der ersten Fasertextur (1) mit dem ersten Pulver teilweise zu füllen,
- Entfernen eines ersten Abschnitts (24) der Form, welcher in einem ersten Bereich gegenüber der Außenseite (1b) der ersten Faserstruktur (1) gelegen ist, nach dem Imprägnieren der ersten Struktur (1) mit der ersten Suspension,
- Positionieren einer zweiten Faserstruktur (20) auf der Außenseite (1b) der ersten Faserstruktur (1) in Höhe des ersten Bereichs, um eine Faseranordnung zu erhalten,
- Positionieren eines zweiten Formabschnitts (28) in Höhe des ersten Bereichs, wobei der zweite Formabschnitt (28), sobald er positioniert ist, gegenüber einer Außenseite (20b) der zweiten Faserstruktur (20) gelegen ist,
- Einbringen einer zweiten Suspension, umfassend ein zweites Pulver aus festen Partikeln aus Keramikmaterial, aus metallischem Material oder aus Kohlenstoff, in das Innenvolumen (2), und
- Imprägnieren der ersten und der zweiten Faserstruktur (1; 20) mit der zweiten Suspension durch Wirken der Fliehkraft, indem die mit dem zweiten Formabschnitt (28) versehene Form um sich selbst in Rotation versetzt wird, um die imprägnierte Faseranordnung zu erhalten, wobei die zweite Suspension die erste Struktur durchläuft, um während dieses Imprägnierungsschrittes die zweite Struktur zu erreichen, wobei das Imprägnieren mit der ersten Suspension und das Imprägnieren mit der zweiten Suspension bei unterschiedlichen Drehzahlen der Form durchgeführt werden.

3. Verfahren nach einem der Ansprüche 1 oder 2, bei dem die Drehrichtung der Form während des Imprägnierens mit der ersten Suspension (10) und/oder während des Imprägnierens mit der zweiten Suspension ein- oder mehrmals umgekehrt wird.

4. Verfahren nach einem der Ansprüche 1 bis 3, bei dem die erste und/oder die zweite Suspension durch Zerstäuben mittels einer oder mehrerer Zerstäubungsvorrichtungen (7; 7a; 7b) in das Innenvolumen eingebracht wird, wobei die Zerstäubungsvorrichtung oder -vorrichtungen (7; 7a; 7b) während des Zerstäubens translatorisch und/oder drehend bewegt werden.

5. Verfahren nach einem der Ansprüche 1 bis 4, bei dem die erste Faserstruktur (1) achsensymmetrisch ist.

6. Verfahren nach einem der Ansprüche 1 bis 5, bei dem die erste Faserstruktur (1) durch zweidimensionales Weben oder durch dreidimensionales Weben erhalten wird.

7. Verfahren nach einem der Ansprüche 1 bis 6, bei dem die erste Faserstruktur (1) Keramikfäden aus feuerfestem Oxid umfasst und bei dem die Partikel des ersten Pulvers Keramikpartikel aus feuerfestem Oxid sind.

8. Verfahren zur Herstellung eines Teils aus Verbundwerkstoff, umfassend wenigstens die folgenden Schritte:
- Herstellen einer imprägnierten Faseranordnung durch Durchführen eines Verfahrens nach einem der Ansprüche 1 bis 7, anschließend
- Ausbilden einer die Faseranordnung verdichtenden Matrixphase aus den Partikeln des ersten und des zweiten Pulvers, um das Teil aus Verbundwerkstoff zu erhalten.

9. Verfahren nach Anspruch 8, bei dem die Matrixphase ganz oder teilweise durch Sintern der Partikel des ersten und des zweiten Pulvers gebildet wird.

## Claims

1. A method of fabricating an impregnated fiber assembly, the method comprising at least the following steps:
- introducing a first suspension (10) comprising a first powder of solid particles of ceramic material, of metal material, or of carbon material into an inside volume (2) defined by an inside face (1a) of a first fiber texture (1) of hollow shape placed in a mold, an outer face (1b) of the first fiber texture (1) being present facing a wall (3) of the mold;
- using the action of centrifugal force to impregnate the first fiber texture (1) with the first suspension (10) by rotating the mold;
- after impregnating the first texture (1) with the first suspension, positioning a second fiber texture (20) on the inside face (1a) of the first fiber texture (1) in order to obtain a fiber assembly;
- introducing a second suspension comprising a second powder of solid particles made of ceramic material, of metal material, or of carbon, into the inside volume (2) after putting the second fiber texture (20) into position; and
- using the action of centrifugal force to impregnate the second fiber texture (20) with the second suspension by rotating the mold in order to obtain an impregnated fiber assembly, the impregnation with the first suspension and the impregnation with the second suspension being carried out at different speeds of rotation of the mold.

2. A method of fabricating an impregnated fiber assembly, the method comprising at least the following steps:
- introducing a first suspension (10) comprising a first powder of solid particles of ceramic material, of metal material, or of carbon material into an inside volume (2) defined by an inside face (1a) of a first fiber texture (1) of hollow shape placed in a mold, an outer face (1b) of the first fiber texture (1) being present facing a wall (3) of the mold;
- using the action of centrifugal force to impregnate the first fiber texture (1) with the first suspension (10) by rotating the mold in order to fill the pores of the first fiber texture (1) in part with the first powder;
- after impregnating the first texture (1) with the first suspension, removing a first portion (24) of the mold situated in a first region facing the outside face (1b) of the first fiber texture (1);
- positioning a second fiber texture (20) on the outer face (1b) of the first fiber texture (1) in the first region in order to obtain a fiber assembly;
- positioning a second mold portion (28) in the first region, the second mold portion (28), once in position, being situated facing an outer face (20b) of the second fiber texture (20);
- introducing a second suspension comprising a second powder of solid particles made of ceramic material, of metal material, or of carbon into the inside volume (2); and
- using the action of centrifugal force to impregnate the first and second fiber textures (1; 20) with the second suspension by rotating the mold fitted with the second mold portion (28) in order to obtain the impregnated fiber assembly, the second suspension passing through the first texture in order to reach the second texture during this impregnation step, the impregnation with the first suspension and the impregnation with the second suspension being carried out at different speeds of rotation of the mold.

3. A method according to any one of claims 1 to 2, wherein the direction of rotation of the mold is reversed one or more times while impregnating with the first suspension (10) and/or while impregnating with the second suspension.

4. A method according to any one of claims 1 to 3, wherein the first and/or second suspension is introduced into the inside volume by spraying via one or more spray devices (7; 7a; 7b), the spray device(s) (7; 7a; 7b) being driven with movement in translation and/or rotation during spraying.

5. A method according to any one of claims 1 to 4, wherein the first fiber texture (1) is axisymmetric.

6. A method according to any one of claims 1 to 5, wherein the first fiber texture (1) is obtained by two-dimensional weaving or by three-dimensional weaving.

7. A method according to any one of claims 1 to 6, wherein the first fiber texture (1) comprises refractory oxide ceramic yarns and wherein the particles of the first powder are refractory oxide ceramic particles.

8. A method of fabricating a composite material part, the method comprising at least the following steps:
- fabricating a fiber assembly impregnated by performing a method according to any one of claims 1 to 7; and then
- forming a matrix phase from the particles of the first and second powders, thereby densifying the fiber assembly in order to obtain the composite material part.

9. A method according to claim 8, wherein the matrix phase is formed in full or in part by sintering the particles of the first and second powders.
